# EUROPEAN PATENT SPECIFICATION

(11) **EP 0 720 541 B1**
(45) Date of publication and mention of the grant of the patent: **19.05.1999**
(21) Application number: 95922315.7
(22) Date of filing: 12.06.1995
(51) Int. Cl.: B60R 16/02

(54) **POWER DISTRIBUTION BOX AND SYSTEM**
VERTEILERKASTEN UND SYSTEM
BOITIER ET SYSTEME DE DISTRIBUTION ELECTRIQUE

(30) Priority: 23.06.1994 US 264796
(43) Date of publication of application: 10.07.1996
(73) Proprietor: UT Automotive Dearborn, Inc., Dearborn, MI 48126-9982 (US)
(72) Inventor: MAUE, H., Winston, Northville, MI 48167 (US); ZEIDEN, Mohamad, H., Dearborn, MI 48126 (US); STEIGERWALD, Luke, P., Manlius, NY 13104 (US)
(74) Representative: Gilding, Martin John
(86) International application number: US9507473
(87) International publication number: WO9600156

(56) References cited:
- EP-A- 0 248 181
- EP-A- 0 387 772
- EP-A- 0 567 403
- EP-A- 0 572 052
- DE-A- 3 824 857
- DE-C- 3 732 087
- FR-A- 2 502 887

## Description

### BACKGROUND OF THE INVENTION

This invention relates generally to power distribution systems and specifically to a power distribution box used in an automotive vehicle power distribution system.

Due to the ever-increasing electrical content present within recent automotive vehicles, the electrical power distribution system within these vehicles has become quite complex Accordingly, power distribution boxes, otherwise known as junction boxes, have been commonly employed within many of these vehicles. Traditional power distribution boxes have an internal construction consisting of either alternating layers of busbars and insulators, or rigid printed circuit boards. External wire harnesses and electronic modules are typically connected to various of the conductive members.

Examples of conventional power distribution boxes are disclosed within the following U.S. patents: 5,160,274 entitled "Branch Junction Box and Busbars for Branch Connection," which issued to Ozaki et al. on November 3, 1992: 5,154,647 entitled "Electrical Junction Block for Automobile and A Method for Manufacturing the Same," which issued to Ishitani et al. on October 13, 1992; 5,057,026 entitled "Electric Junction Box," which issued to Sawai et al. on October 15, 1991; 5,023,752 entitled "Electrical Power Distribution Center," which issued to Detter et al. on June 11, 1991; 4,689,718 entitled "Programmable Junction Box," which issued to Maue et al. on August 25, 1987; and, 4,355,853 entitled "Electrical Junction Box," which issued to Kourimsky on October 26, 1982.

Conventional power distribution boxes are located in either an engine compartment or a passenger compartment of an automotive vehicle. A bulkhead separates the engine compartment from the passenger compartments. In many vehicles, a first power distribution box is located within an engine compartment and a second power distribution box is positioned inside an instrument panel in a passenger compartment. These power distribution systems require a jumper harness between a battery and the engine compartment power distribution box, another wire harness extending between the engine compartment power distribution box and a bulkhead connector located at a bulkhead panel, a wire harness between the engine compartment power distribution box and various engine compartment components, yet another wire harness between the bulkhead connector and a passenger compartment fuse block, and either another wire harness or a spliced branch extending to a passenger compartment relay block. In some traditional constructions, the passenger compartment fuse block and relay block may be supplemented by or integrated into another power distribution box located within the passenger compartment.

Furthermore, various German automotive vehicles employ a pair of substantially parallel crosscar bulkheads juxtapositioned within an engine compartment the rearmost of these bulkheads separates the engine compartment and the passenger compartment. In this construction, a junction box and a battery are located between the pair of bulkheads. However, numerous jumper wire harnesses must be employed with bulkhead connectors therebetween to supply power to both the engine and passenger compartments. It is significant to note that the many redundant wire harnesses, jumper wire harnesses, connectors, splices and bulkhead gaskets employed in the aforementioned conventional power distribution systems are costly to produce and assemble, failure prone and cumbersome to package.

Traditional power distribution systems also have a direct electrical feed or wire from the battery and alternator to a power distribution box and a second direct electrical feed from the battery and alternator to an ignition switch. Furthermore, conventional power distribution systems provide a maxi fuse between a battery and a power distribution box The maxi fuse protects the heavy wire gauge that feeds the power distribution box fuses.

European Patent Application No. 0 387 772 describes a generic electrical interconnection system for connecting electrical systems on the engine side of an automobile or truck with switches and/or indicators on the cabin side. Elongate contact members extend through a housing and transverse members, which access the housing by means of a slot in the top of the housing, are provided for electrically engaging certain of the elongate contact members. The housing may be provided with a plurality of channels which locate a part which locks into a hole in the bulkhead of an automobile.

DE-A-38 24 857 describes a wiring structure and coupling that is positioned between a vehicle interior and its engine compartment. The coupling is formed by two connectors joined with each other through an opening in a portion of the partition between the vehicle interior and the engine compartment.

### SUMMARY OF THE INVENTION

The invention provides a power distribution box in accordance with claim 1 of the appended claims. In accordance with the present invention, the power distribution box extends through a bulkhead of an automotive vehicle. The power distribution box has a first electrical connector accessible from within an engine compartment and a second electrical connector accessible from within a passenger compartment of the automotive vehicle. In a further aspect of the present invention power distribution system, an electricity storage device and an electricity generating device are directly electrically coupled to a power distribution box which, in turn, supplies power to an ignition switch. In yet another aspect of the present invention power distribution system, an electricity storage device directly supplies power to a power distribution box without a fuse being positioned therebetween.

The power distribution box and system of the present invention have many advantages over conventional constructions. For example, the power distribution system of the present invention reduces the need for bulkhead connectors. The power distribution box of the present invention further reduces the number of wiring harnesses, jumper harnesses and splices therein. Thus, significantly improved electrical continuity and quality are achieved. The present invention power distribution box is also advantageous over traditional systems by integrating the many remotely located junction, relay, fuse, connector and sealing functions into a single integrated and easily accessible location. This improves cost, assembly, service, packaging and quality. Additional advantages and features of the present invention will become apparent from the following description and the appended claims, taken in conjunction with the accompanying drawings.

### BRIEF DESCRIPTION OF THE DRAWINGS

Figure 1 is a side elevational view, partially in section, showing a preferred embodiment of a power distribution box and system of the present invention in relation to a bulkhead;
Figure 2 is a fore and aft sectional view showing the preferred embodiment of the present invention power distribution box and system of Figure 1;
Figure 3 is an exploded perspective view showing an alternate embodiment of the present invention power distribution box of Figure 1; and
Figures 4a-4k are a circuit diagram of the preferred embodiment power distribution system within which the preferred embodiment of the present invention power distribution box of Figure 1 is employed.

### DETAILED DESCRIPTION OF THE PREFERRED EMBODIMENT

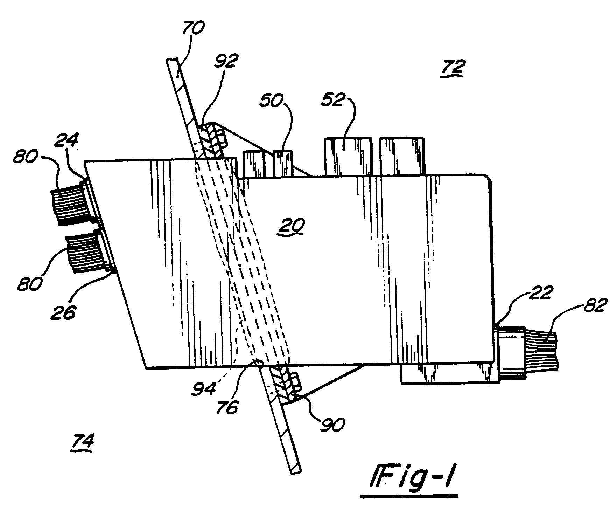

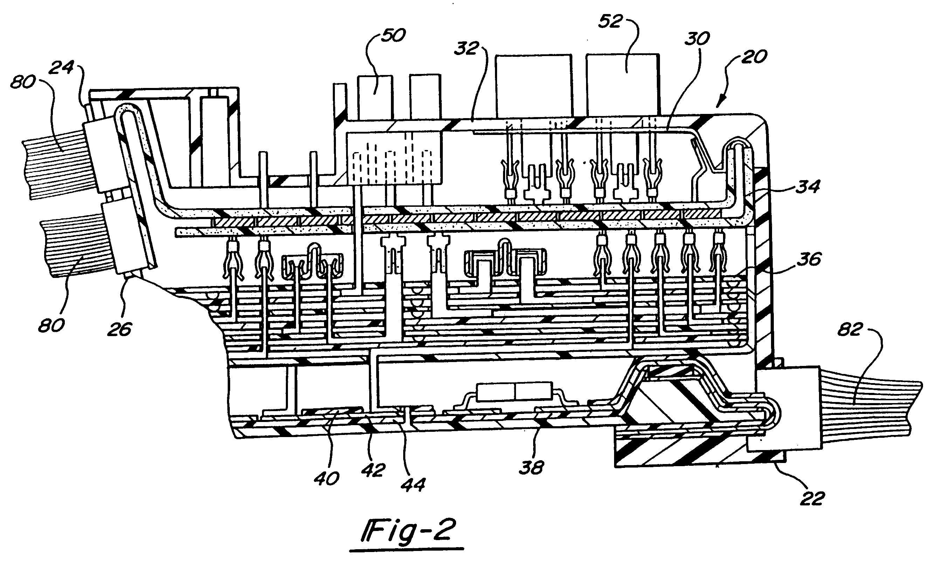

A preferred embodiment of a power distribution system of the present invention is shown in Figures 1 and 2. The power distribution system employs a power distribution box 20 having a first electrical connector 22, a second electrical connector 24 and a third electrical connector 26. Power distribution box 20 includes a conductive deposited metal trace 30 secured to a hingeable cover 32, a rigid printed circuit board 34, a busbar and insulator assembly 36 and a flexible printed circuit board 38. Flexible printed circuit board 38 is defined by a first film sheet 49, a conductive metallic layer 42, and a second film sheet 44. A plurality of maxi fuses 50 of approximately 30 to 80 amps, mini fuses (also shown as 50) of approximately 3 to 30 amps, ISO relays 52 and half ISO relays (also shown as 52) are attached to cover 32 and electrically coupled to at least one of the internal electrically conductive means (30, 34, 36 and 38).

The automotive vehicle has a bulkhead 70 which structurally separates an engine compartment 72 from a passenger compartment 74. Bulkhead 70 has an inside edge 76, defining an aperture therethrough. Power distribution box 20 is juxtaposed against bulkhead 70, such that a portion of power distribution box 20 extends within passenger compartment 74 and is accessible therefrom. Thus, a pair of body wire harnesses 80 are electrically coupled to power distribution box connectors 24 and 26. Power distribution box 20 further has a portion thereof projecting within engine compartment 72 such that an engine wire harness 82 is electrically coupled with power distribution box connector 22 Moreover, fuses 50 and relays 52 are accessible and serviceable from within engine compartment 72. In the alternative, fuses 50 and relays 52 may be positioned upon or within power distribution box 20, so as to be accessible from passenger compartment 74.

Power distribution box 20 has a flange 90 formed therearound so as to provide a mounting surface for attachment to the engine compartment side of bulkhead 70. A closed cell foam seal 92 is located between flange 90 and fire wall 70 proximate with inside edge 76 of bulkhead 70. Additionally, a gel sealant material 94, which can be purchased from **Raychem®,** is pumped into power distribution box 20. Seals 92 and 94 act to reduce engine noise, dust intrusion, and fumes from passing between engine compartment 72 and passenger compartment 74.

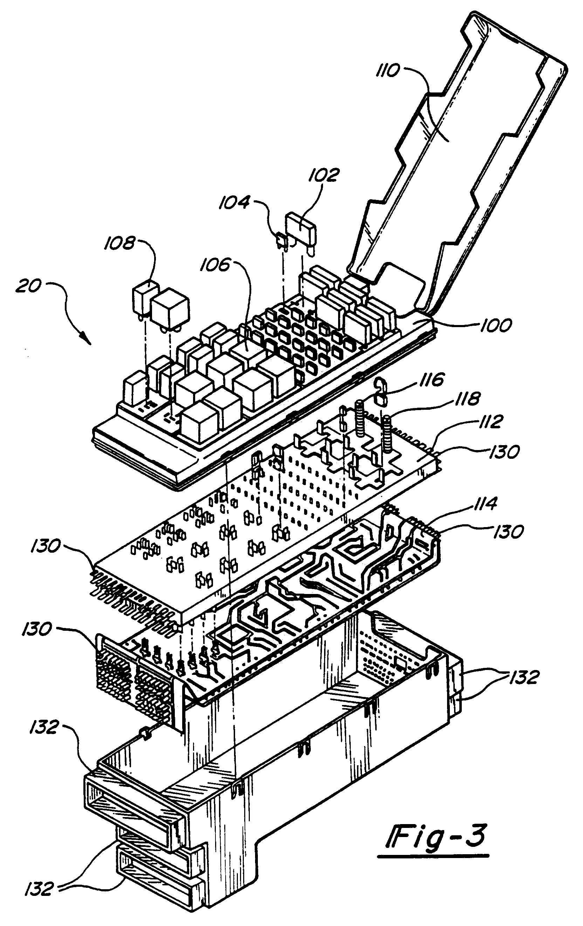

An alternate embodiment power distribution box 20 of the present invention is shown in Figure 3. This embodiment provides a shelf 100 which retains a plurality of maxi fuses 102, mini fuses 104, ISO relays 106, and half ISO relays 108. This shelf 100 is enclosed within a hingeable cover 110. Also, within power distribution box 20 of this embodiment are electrically conductive means including a busbar and insulator assembly 112 and a rigid printed circuit board 114. A battery terminal or stud 116 and an alternator terminal or stud 118 project from busbar and insulator assembly 112 for connection to a battery and alternator, respectively, via jumper cable feeds. A plurality of male blades or pins 130 project from the edges of busbar and insulator assembly 112 and rigid printed circuit board 114 for providing the electrical coupling means within their respective power distribution box electrical connectors 132.

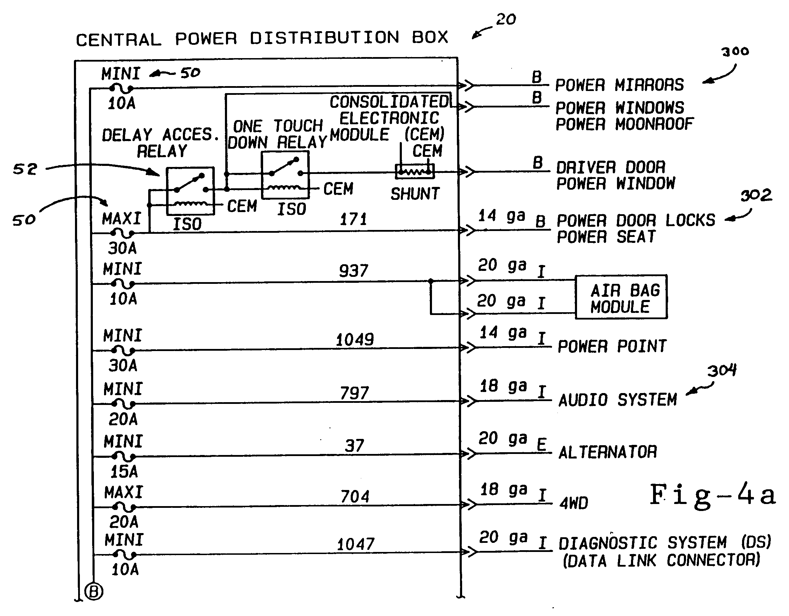

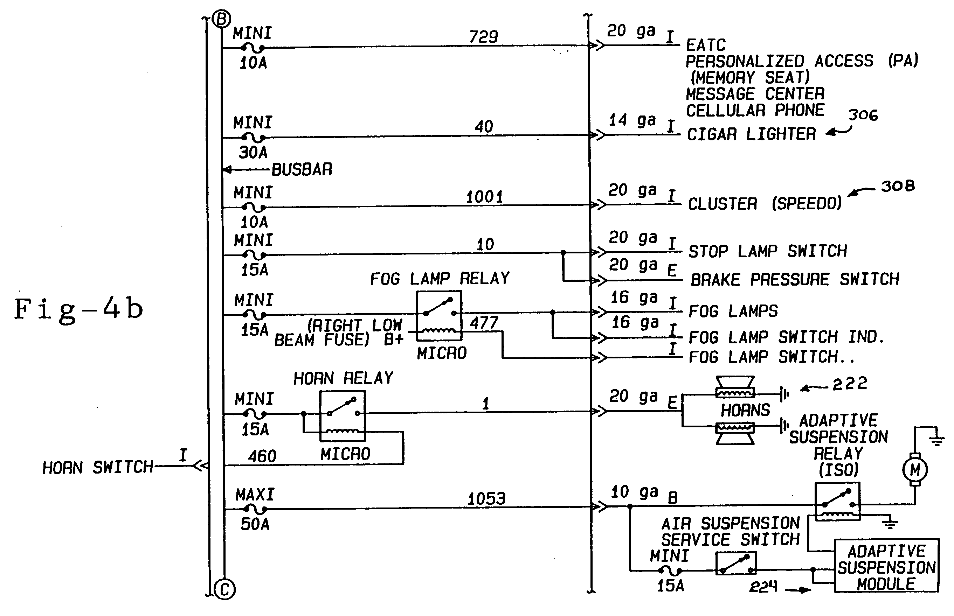

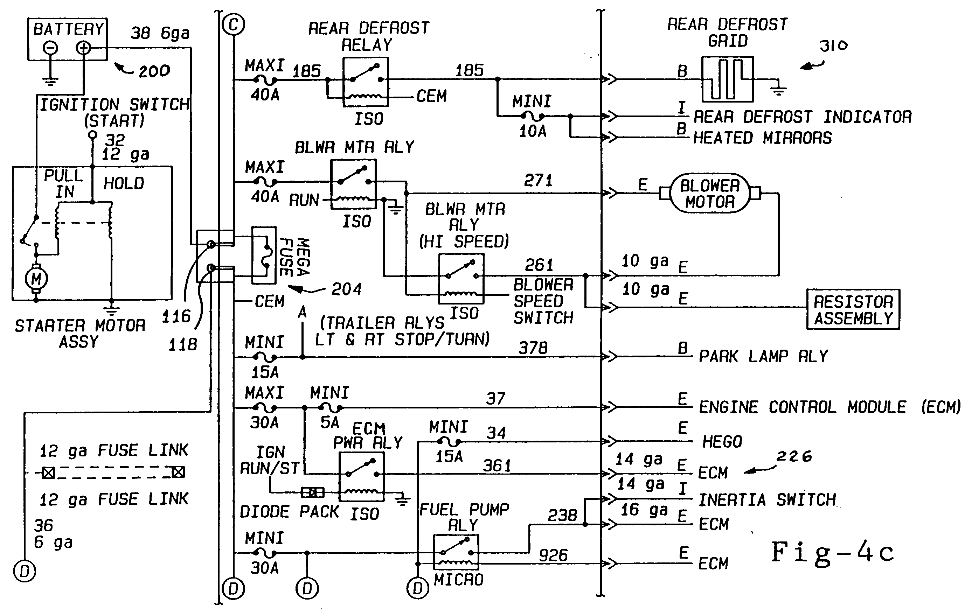

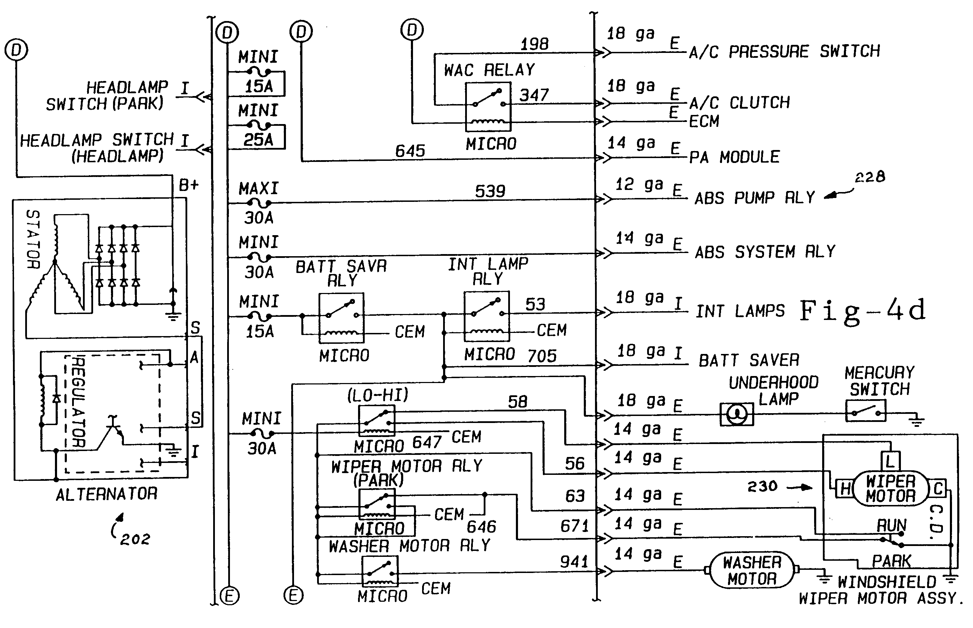

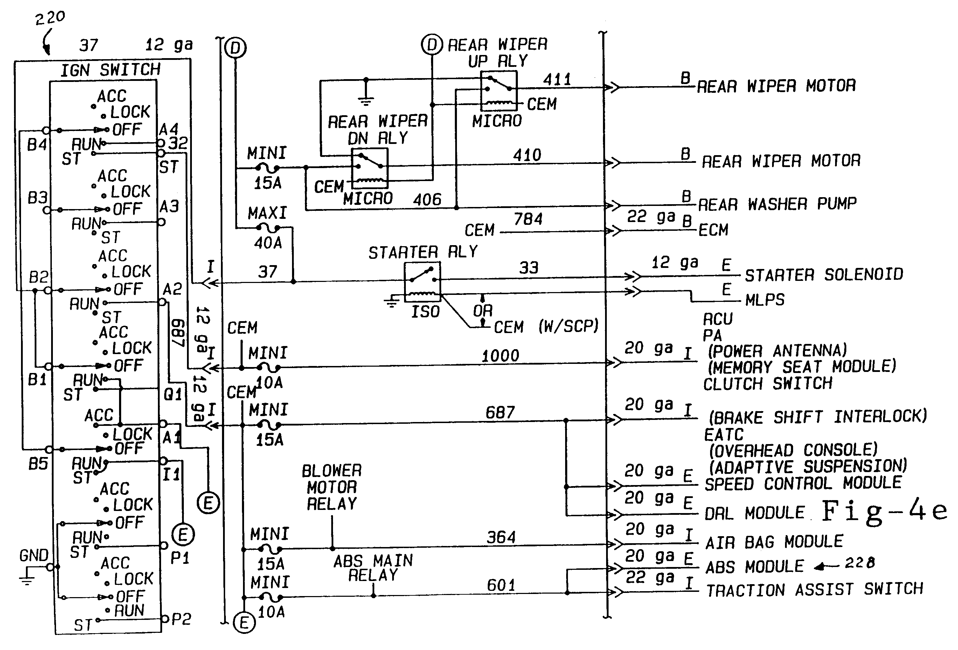

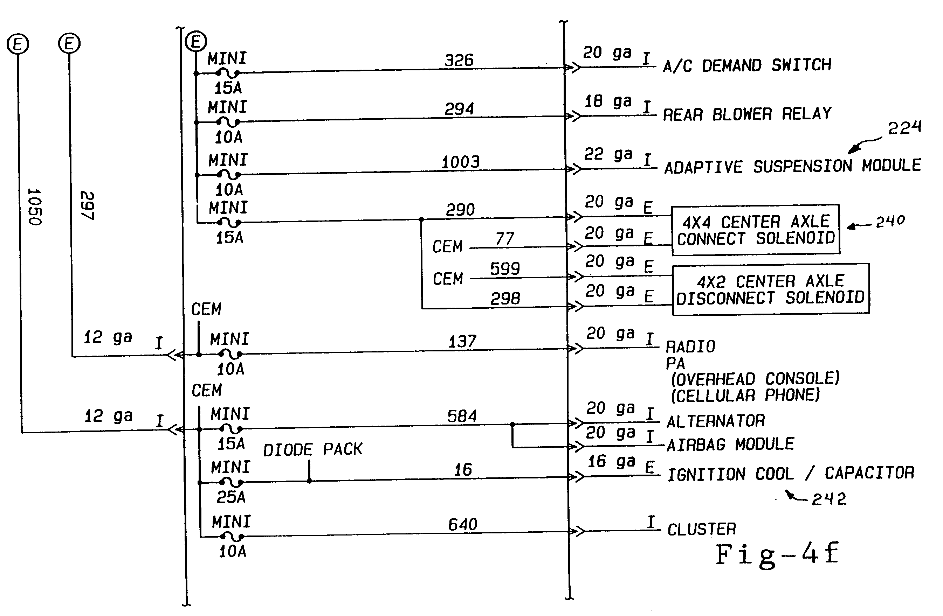

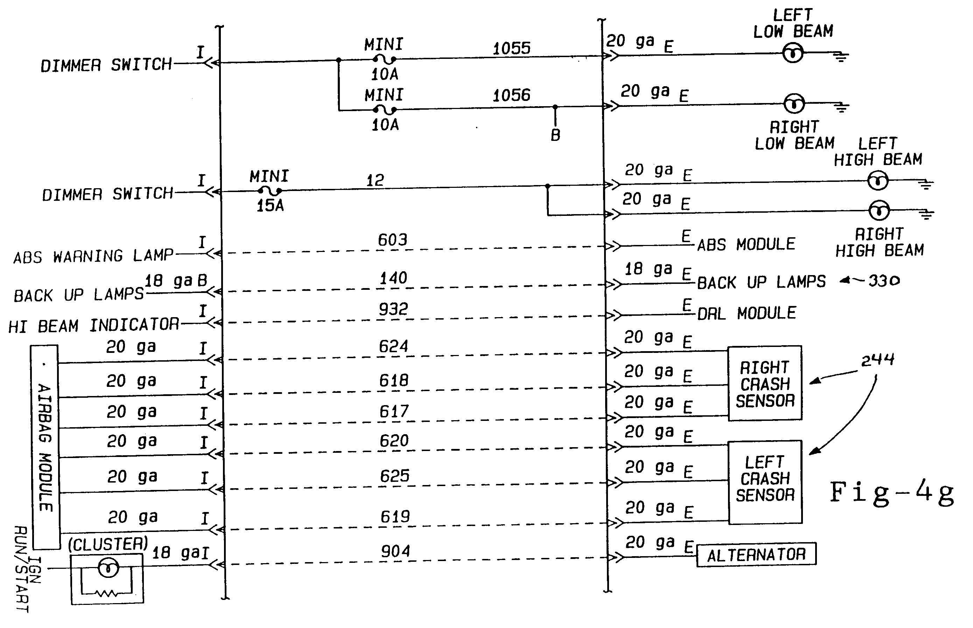

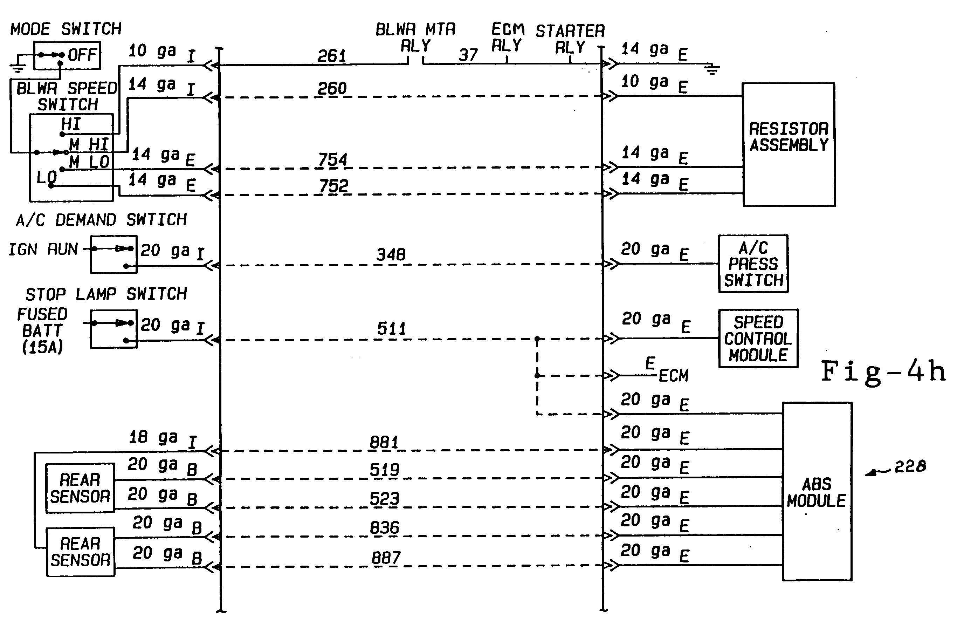

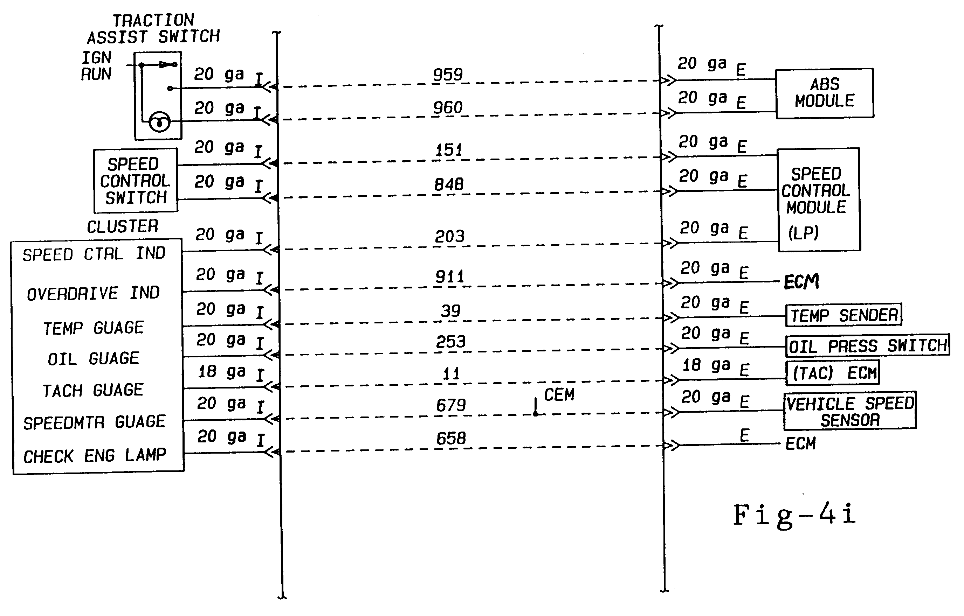

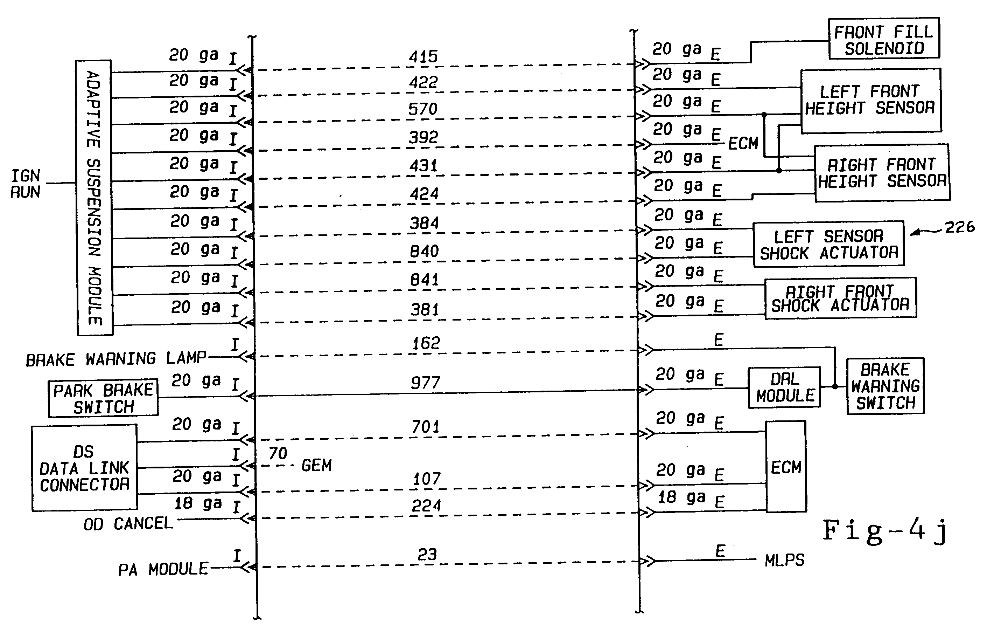

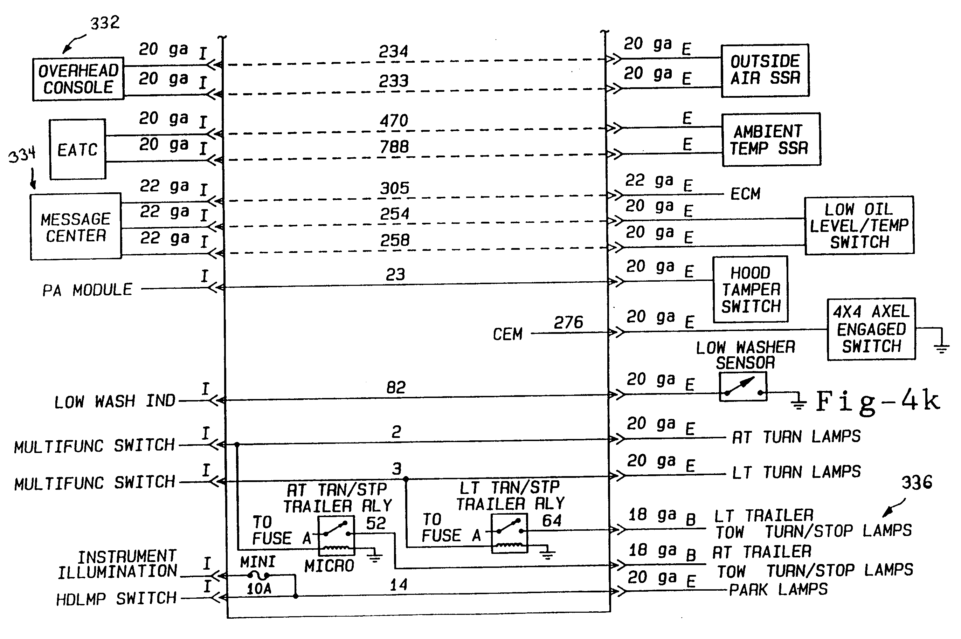

Referring Figures 1 and 4, an electricity storage device or battery 200 is directly electrically coupled to terminal 116 of power distribution box 20 without a fuse being located therebetween. An electricity generating device or alternator 202 is electrically coupled to terminal 118 of power distribution box 20. A mega fuse 204 is connected between terminal 116 and terminal 118 within power distribution box 20. This allows fuse 204 to be more easily serviced over traditional constructions. Power distribution box 20 then distributes electrical power through various fuses 50, relays 52 and any other electronics contained therein. The electrical power is then distributed and transmitted to engine wire harness 82 which electrically feeds various engine compartment components including an ignition switch 220, horns 222, an adaptive suspension module 224, an electronic engine control module 226, an anti-lock braking system pump relay 228, a windshield wiper assembly 230, transmission connection solenoids 240, ignition coils 242, crash sensors 244, and shock sensor actuators 226. Electrical power is also fed through power distribution box 20 and, in turn, body wire harnesses 80, to various passenger compartment components including power mirrors 300, power door locks 302, an audio system 304, a cigar lighter 306, an instrument panel cluster 308, a rear defrost grid 310, backup lamps 330, overhead consoles 332, instrument panel message centers 334, and trailer towing lamps 336.

The present invention power distribution box and system provide many advantages over prior art constructions. The present invention power distribution box is positioned to extend through the bulkhead so as to have portions thereof accessible from the engine compartment and other portions thereof accessible from the passenger compartment. This eliminates the traditional extraneous jumper wire harnesses (each having over 100 discrete wires therein), expensive bulkhead connectors and bulkhead seals. The power distribution box of the present invention allows for use of modularized wire harnesses that can be simply attached to the power distribution box electrical connectors. This power distribution box further eliminates separate relay blocks, fuse blocks and supplemental power distribution boxes located on both sides of the bulkhead. Thus, the present invention can be produced and assembled at a lower cost, with fewer parts, that is more reliable, and in a centralized fashion for promoting ease of service. The present invention further simplifies the power distribution system architecture over traditional redundant constructions.

While the preferred embodiment of this power distribution box and system have disclosed, it will be appreciated that various modifications may be made without departing from the present invention. For example, the power distribution box may only include a busbar and insulator assembly or any combination of the electrically conductive means therein. Furthermore, the power distribution box may be mounted from within the passenger compartment. An electronic module may also be integrated or attached to the power distribution box. Moreover, the novel circuitry regarding the ignition switch feed and battery fusing may be employed in a power distribution box which does not pass through the bulkhead. Various materials and circuits have been disclosed in exemplary fashion, however, other materials and circuitry may of course be employed. It is intended by the following claims to cover these and any other departures from the disclosed embodiments which fall within the scope of the appended claims.

## Claims

1. A power distribution box (20) in an automotive vehicle having a bulkhead (70) separating an engine compartment (72) and a passenger compartment (74) within said automotive vehicle, said bulkhead having an edge (76) defining an aperture therein; said power distribution box having a first electrical connector (22), a second electrical connector (24, 26) and at least one electrically conductive means (30, 34, 36, 38, 112) for distributing electrical power between said first and second electrical connectors;
said power distribution box characterized in that said power distribution box (20) is disposed within and extends through said aperture of said bulkhead (70) whereby a first portion thereof is accessible from said engine compartment (72) and a second portion thereof is accessible from said passenger compartment (74), said first electrical connector (22) is accessible from said engine compartment (72) and said second electrical connector (24, 26) is accessible from said passenger compartment (74).

2. The power distribution box of Claim 1 further characterized in that an engine wire harness (82) electrically coupled to said first electrical connector (22) of said power distribution box (20).

3. The power distribution box of Claim 2, further characterized in that said first electrical connector (22) of said power distribution box (20) includes a plurality of conductive metal blades projecting from and electrically coupled to said at least one electrically conductive means (30, 34, 36, 38, 112).

4. The power distribution box of Claim 1 or 2 further characterized in that a body wire harness (80) is electrically coupled to said second electrical connector (24, 26) of said power distribution box (20).

5. The power distribution box of Claim 4 further characterized in that said second electrical connector (24) of said power distribution box (20) includes a plurality of conductive metal blades projecting from and electrically coupled to at least one said electrically conductive means (30, 34, 36, 38, 112).

6. The power distribution box of Claim 1 further characterized in that:
a terminal (116) of said power distribution box (20) is electrically coupled to an electricity generative device (200) of said automotive vehicle, said terminal (116) accessible from said engine compartment (72).

7. The power distribution box of Claim 1 further characterized in that said electrically conductive means of said power distribution box includes at least one busbar and insulator assembly (36, 112).

8. The power distribution box of Claim 1 further characterized in that said electrically conductive means of said power distribution box includes at least one conductive deposited metal trace (30).

9. The power distribution box of Claim 1 further characterized in that said electrically conductive means of said power distribution box includes a rigid printed circuit board. (34).

10. The power distribution box of Claim 1 further characterized in that said electrically conductive means of said power distribution box includes a flexible printed circuit board (38).

11. The power distribution box of Claim 1 further characterized in that said power distribution box further includes a plurality of fuses (50) electrically coupled to at least one said electrically conductive means (30, 34, 36, 38, 112) and accessible from said engine compartment (72).

12. The power distribution box of Claim 1 further characterized in that said power distribution box further includes a plurality of relays (52) electrically coupled to said electrically conductive means (30, 34, 36, 38, 112) and accessible from said engine compartment (72).

## Patentansprüche

1. Ein Leistungsverteilungskasten (20) in einem eigenangetriebenen Fahrzeug, das eine Trennwand (70) aufweist, die einen Motorraum (72) und einen Fahrgastraum (74) innerhalb des eigenangetriebenen Fahrzeugs trennt, wobei die Trennwand eine Kante (76) aufweist, die eine Öffnung in dieser definiert; wobei der Leistungsverteilungskasten einen ersten elektrischen Verbinder (22), einen zweiten elektrischen Verbinder (24,26) und mindestens eine elektrisch leitende Einrichtung (30,34,36,38,112) zum Verteilen von elektrischer Leistung zwischen dem ersten und dem zweiten Verbinder aufweist;
wobei der Leistungsverteilungskasten dadurch gekennzeichnet ist, daß der Leistungsverteilungskasten (20) innerhalb der Öffnung der Trennwand (70) angeordnet ist und sich durch diese hindurch erstreckt, wodurch ein erster Abschnitt davon von dem Motorraum (72) zugänglich ist, und ein zweiter Abschnitt davon von dem Fahrgastraum (74) zugänglich ist, wobei der erste elektrische Verbinder (22) von dem Motorraum (72) zugänglich ist und der zweite elektrische Verbinder (24,26) von dem Fahrgastraum (74) zugänglich ist.

2. Der Leistungsverteilungskasten nach Anspruch 1, der ferner dadurch gekennzeichnet ist, daß ein Motor-Kabelbaum (82) elektrisch mit dem ersten Verbinder (22) des Leistungsverteilungskastens (20) gekoppelt ist.

3. Der Leistungsverteilungskasten nach Anspruch 2, der ferner dadurch gekennzeichnet ist, daß der erste elektrische Verbinder (22) des Leistungsverteilungskastens (20) eine Mehrzahl von leitenden Metallklingen aufweist, die von der mindestens einen elektrisch leitenden Einrichtung (30,34,36,38,112) abstehen und mit dieser gekoppelt sind.

4. Der Leistungsverteilungskasten nach Anspruch 1 oder 2, der ferner dadurch gekennzeichnet ist, daß ein Karosserie-Kabelbaum (80) mit dem zweiten elektrischen Verbinder (24,26) des Leistungsverteilungskasten (20) elektrisch gekoppelt ist.

5. Der Leistungsverteilungskasten nach Anspruch 4, der ferner dadurch gekennzeichnet ist, daß der zweite elektrische Verbinder (24) des Leistungsverteilungskastens (20) eine Mehrzahl von leitenden Metallklingen aufweist, die von der mindestens einen elektrisch leitenden Einrichtung (30,34,36,38,112) abstehen und mit dieser gekoppelt sind.

6. Der Leistungsverteilungskasten nach Anspruch 1, der ferner dadurch gekennzeichnet ist, daß:
ein Anschluß (116) des Leistungsverteilungskastens (20) mit einem Elektrizitäts-erzeugenden Gerät (200) des eigenangetriebenen Fahrzeugs elektrisch gekoppelt ist, wobei der Anschluß (116) von dem Motorraum (72) zugänglich ist.

7. Der Leistungsverteilungskasten nach Anspruch 1, der ferner dadurch gekennzeichnet ist, daß die elektrisch leitende Einrichtung des Leistungsverteilungskastens (20) mindestens eine Sammelschiene und eine Isolieranordnung (36,112) aufweist.

8. Der Leistungsverteilungskasten nach Anspruch 1, der ferner dadurch gekennzeichnet ist, daß die elektrisch leitende Einrichtung des Leistungsverteilungskastens (20) mindestens eine leitende abgeschiedene Metallspur (30) aufweist.

9. Der Leistungsverteilungskasten nach Anspruch 1, der ferner dadurch gekennzeichnet ist, daß die elektrisch leitende Einrichtung des Leistungsverteilungskastens (20) eine starre gedruckte Schaltungsplatine (34) aufweist.

10. Der Leistungsverteilungskasten nach Anspruch 1, der ferner dadurch gekennzeichnet ist, daß die elektrisch leitende Einrichtung des Leistungsverteilungskastens (20) eine flexible gedruckte Schaltungsplatine (38) aufweist.

11. Der Leistungsverteilungskasten nach Anspruch 1, der ferner dadurch gekennzeichnet ist, daß der Leistungsverteilungskasten ferner eine Mehrzahl von Sicherungen (50) aufweist, die mit mindestens einer der elektrisch leitenden Einrichtungen (30,34,36,38,112) elektrisch gekoppelt sind und von dem Motorraum (72) zugänglich sind.

12. Der Leistungsverteilungskasten nach Anspruch 1, der ferner dadurch gekennzeichnet ist, daß der Leistungsverteilungskasten ferner eine Mehrzahl von Relais (52) aufweist, die mit der bzw. den elektrisch leitenden Einrichtung(en) (30,34,36,38,112) elektrisch gekoppelt sind und von dem Motorraum (72) zugänglich sind.

## Revendications

1. Un boîtier de distribution de puissance (20) dans un véhicule automobile ayant une cloison de séparation (70) séparant un compartiment moteur (72) et un compartiment passagers (74) dans ledit véhicule automobile, ladite cloison de séparation ayant un bord (76) définissant en son sein une ouverture ; ledit boîtier de distribution de puissance ayant un premier connecteur électrique (22), un deuxième connecteur électrique (24, 26) et au moins un moyen électroconducteur (30, 34, 36, 38, 112) pour distribuer une puissance électrique entre lesdits premier et deuxième connecteurs électriques ;
ledit boîtier de distribution de puissance étant caractérisé en ce que le dit boîtier de distribution de puissance (20) est disposé dans et s'étend à travers ladite ouverture de ladite cloison de séparation (70) de manière que sa première partie soit accessible depuis ledit compartiment moteur (72) et que sa deuxième partie soit accessible depuis ledit compartiment passagers (74), ledit premier connecteur électrique (22) étant accessible depuis ledit compartiment moteur (72) et ledit deuxième connecteur électrique (24, 26) étant accessible depuis ledit compartiment passagers (74).

2. Le boîtier de distribution de puissance selon la revendication 1, caractérisé en outre en ce qu'un harnais de fils de moteur (82) est couplé électriquement au dit premier connecteur électrique (22) dudit boîtier de distribution de puissance (20).

3. Le boîtier de distribution de puissance selon la revendication 2, caractérisé en outre en ce que ledit premier connecteur électrique (22) dudit boîtier de distribution de puissance (20) comprend une pluralité de lames métalliques conductrices faisant saillie de et couplées électriquement au dit au moins un moyen électroconducteur (30, 34, 36, 38, 112).

4. Le boîtier de distribution de puissance selon la revendication 1 ou 2, caractérisé en outre en ce qu'un harnais de fils de corps (80) est couplé électriquement au dit deuxième connecteur électrique (24, 26) dudit boîtier de distribution de puissance (20).

5. Le boîtier de distribution de puissance selon la revendication 4, caractérisé en outre en ce que ledit deuxième connecteur électrique (24) dudit boîtier de distribution de puissance (20) comprend une pluralité de lames métalliques conductrices faisant saillie du, et couplées électriquement au, dit au moins un moyen électroconducteur (30, 34, 36, 38, 112).

6. Le boîtier de distribution de puissance selon la revendication 1, caractérisé en outre en ce qu' :
une borne (116) dudit boîtier de distribution de puissance (20) est couplée électriquement à un dispositif de génération d'électricité (200) dudit véhicule automobile, ladite borne (116) étant accessible depuis ledit compartiment moteur (72).

7. Le boîtier de distribution de puissance selon la revendication 1, caractérisé en outre en ce que lesdits moyens électroconducteurs dudit boîtier de distribution de puissance comprennent au moins un agencement de barre bus et d'isolateur (36, 112).

8. Le boitier de distribution de puissance selon la revendication 1, caractérisé en outre en ce que ledit moyen électroconducteur dudit boîtier de distribution de puissance comprend au moins une trace métallique déposée (30) conductrice.

9. Le boîtier de distribution de puissance selon la revendication 1, caractérisé en outre en ce que ledit moyen électroconducteur dudit boîtier de distribution de puissance comprend une plaquette à circuits imprimés (34) rigide.

10. Le boîtier de distribution de puissance selon la revendication 1, caractérisé en outre en ce que ledit moyen électroconducteur dudit boîtier de distribution de puissance comprend une plaquette à circuits imprimés (38) flexible.

11. Le boîtier de distribution de puissance selon la revendication 1, caractérisé en outre en ce que ledit boîtier de distribution de puissance comprend en outre une pluralité de fusibles (50) couplés électriquement au dit au moins un moyen électroconducteur (30, 34, 36, 38, 112) et accessibles depuis ledit compartiment moteur (72).

12. Le boîtier de distribution de puissance selon la revendication 1, caractérisé en outre en ce que ledit boîtier de distribution de puissance comprend en outre une pluralité de relais (52) couplés électriquement au dit moyen électroconducteur (30, 34, 36, 38, 112) et accessibles depuis ledit compartiment moteur (72).
